# DEMANDE DE BREVET EUROPEEN

(11) **EP 0 744 211 A1**
(43) Date de publication de la demande: **27.11.1996**
(21) Numéro de dépôt: 96107973.8
(22) Date de dépôt: 20.05.1996
(51) Int. Cl.: B01D 53/92

(54) **Machine pour l'épuration de gaz d'échappement de véhicules automobiles**

(30) Priorité: 22.05.1995 IT VI950084
(71) Demandeur: Carestiato, Amelia Fabiola, I-36035 Marano Vicentino (Vicenza) (IT)
(72) Inventeur: Pasqualotto, Maurizio, 36035 Marano Vicentino (Vicenza) (IT)
(74) Mandataire: Bettello, Luigi, Dott. Ing.

(57) **Abrégé**

La machine comprend un récipient (1), par exemple sphérique, dont la partie inférieure assure la diffusion fine des fumées ou des gaz dans une solution aqueuse et leur filtration primaire, tandis que la partie supérieure opère la filtration finale de ces mêmes fumées et gaz à travers des filtres (21) convenablement imbibés d'huile par des rouleaux entraînés par un arbre vertical (19) maintenu en rotation lente par un moto-réducteur (20).

## Description

La présente invention a pour objet une machine pour épurer les fumées industrielles, tout particulièrement des gaz d'échappement de véhicules automobiles de grosse cylindrée, dans les cas où il est nécessaire de maintenir le moteur en fonctionnement dans des locaux fermés, en vue de permettre les réparations, révisions, opérations d'entretien, essais ou autres.

La machine d'épuration suivant l'invention est définie à la revendication 1 et l'on notera que la caractéristique principale qui distingue cette machine de celles antérieures réside dans le fait qu'on provoque la diffusion fine des fumées ou gaz dans une solution aqueuse, moyennant introduction de ces fumées ou gaz à travers des croisillons qui sont disposés suivant des plans placés à différentes hauteurs et séparés par des filtres appropriés.

Une autre caractéristique remarquable de la machine suivant l'invention consiste en ce qu'on prévoit, dans la partie supérieure de son récipient (par exemple sphérique), plusieurs filtres, eux aussi disposés suivant des plans espacés et parallèles, ces filtres étant convenablement imprégnés en continu d'huile par contact avec des rouleaux mouilleurs qui puisent l'huile dans des cuvettes appropriées et qui sont maintenus en rotation lente à l'intérieur de ces dernières par un moto-réducteur à axe vertical qui fait tourner les filtres.

Sur le dessin annexé,
la figure 1 est une coupe centrale verticale de la machine selon l'invention ;
la figure 2 est une vue partielle en plan, montrant en détail, suivant une première forme de réalisation de construction, une cuvette d'huile en ses rouleaux mouilleurs intérieurs ;
la figure 3 représente la même cuvette vue par l'avant ;
la figure 4 montre le détail d'un croisillon pour la diffusion des gaz dans la solution aqueuse ;
la figure 5 est une vue de détail du dispositif d'étanchéité périphérique des filtres intérieurs, le tout selon la première forme de réalisation constructive ;
la figure 6 est une coupe centrale verticale de la machine, selon une autre forme de réalisation constructive ;
la figure 7 est la vue partielle en plan de la cuvette d'huile suivant cette variante ;
la figure 8 représente la même cuvette vue par l'avant ;
la figure 9 représente un détail du croisillon inférieur, vu en plan ;
la figure 10 illustre un détail du dispositif d'étanchéité périphérique des filtres supérieurs, le tout selon la deuxième forme de réalisation constructive.

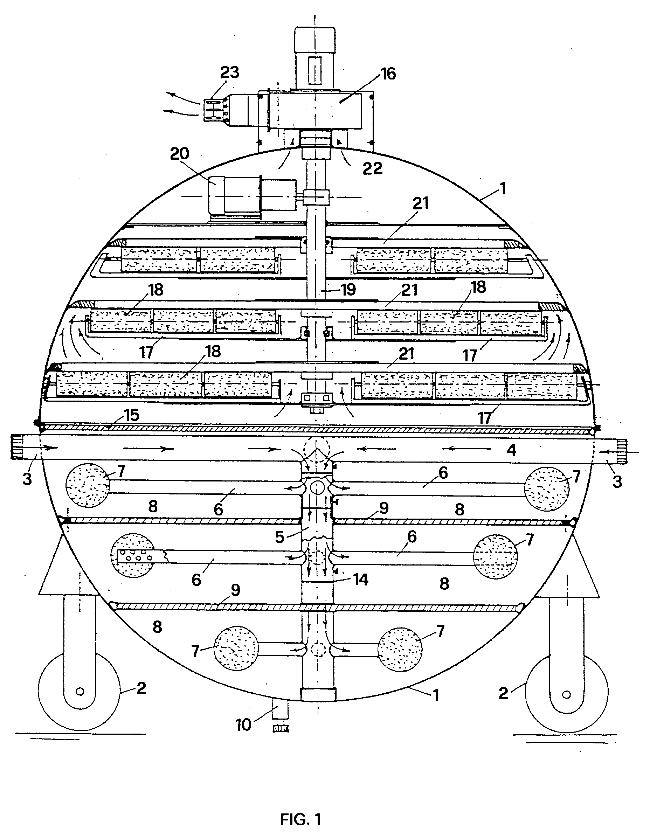

Comme le montre la figure 1, la machine selon l'invention comprend un récipient 1, par exemple sphérique capable de se déplacer sur des roues 2 pour pouvoir être placé à proximité du tuyau d'échappement des gaz, par exemple d'un véhicule automobile, lorsque, pour différentes opérations d'entretien, il est nécessaire de maintenir le moteur en fonctionnement dans des locaux fermés tels que des camions-ateliers, ou autres.

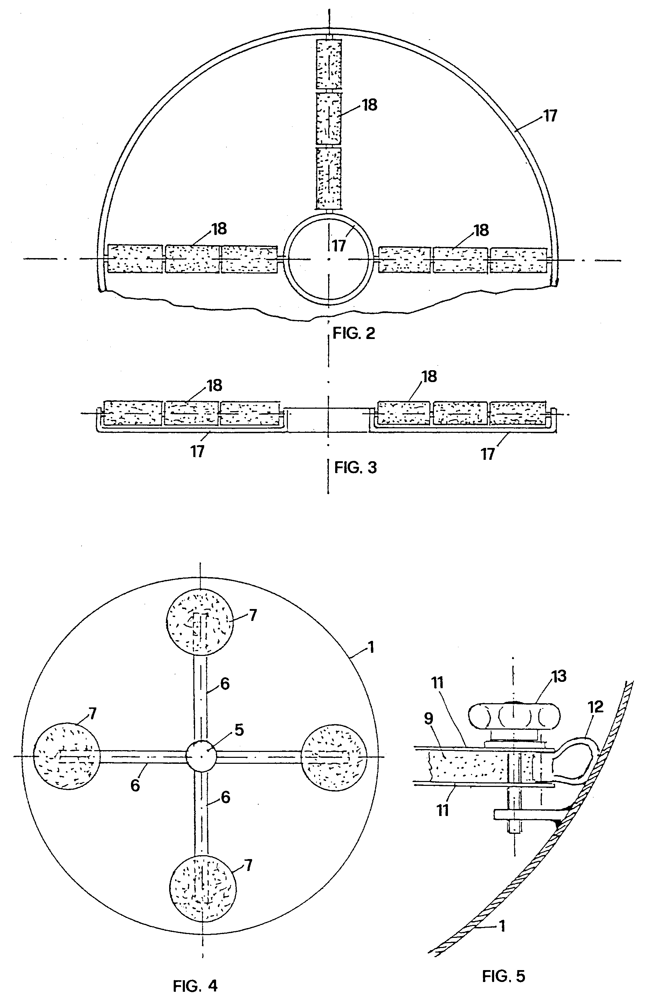

Les gaz qui proviennent, par exemple, de l'échappement du véhicule automobile, passent par un conduit flexible de liaison et entrent dans les bouches d'admission 3 d'un croisillon diamétral 4, pour parvenir dans un conduit central 5, qui porte lui-même une série de croisillons inférieurs 6, lesquels sont munis à leurs extrémités d'un nombre égal d'éléments sphériques poreux 7 servant de brise-fumées, par exemple en bois, afin de déterminer la diffusion fine des gaz dans une solution aqueuse 8 dans laquelle les croisillons 6 sont entièrement immergés (figure 4).

Dans la solution aqueuse qui contient des réactifs appropriés, les minuscules bulles de gaz, en s'élevant lentement, se refroidissent et déposent la quasi totalité des composés du plomb, de l'anhydride sulfureux et des autres substances nocives lourdes, qui descendent et se déposent sur les filtres 9, interposés entre les croisillons 6, et aussi directement sur le fond du récipient 1.

La solution 8 peut être périodiquement vidangée par la vanne 10, pour être remplacée par l'introduction d'une solution neuve à travers une vanne supérieure analogue.

Les filtres 9 qui sont contenus entre deux tôles parallèles perforées 11 (figure 5), exigent une bonne étanchéité périphérique au contact avec la surface inférieure du récipient 1.

Pour obtenir ce résultat, on a imaginé une garniture tubulaire originale 12, insérée et ancrée entre les bords périphériques des tôles perforées 11 de chaque filtre 9.

Un serrage approprié, assuré par exemple par une molette 13, assure l'étanchéité voulue par compression de la garniture 12 sur la surface intérieure du récipient 1.

L'ensemble des croisillons et des filtres peut être démonté séparément pour des nettoyages périodiques, et on le reconstitue ensuite en assemblant les divers éléments à l'aide de joints appropriés 14 (figure 1).

Un double filtre 15 sépare la zone inférieure du récipient de sa zone supérieure. A travers le filtre 15, les gaz partiellement épurés qui sortent de la solution sous-jacente, passent à la zone supérieure pour le parachèvement de leur épuration.

Cette dernière opération est exécutée dans le parcours labyrinthique que les gaz doivent suivre avant de sortir par le haut, aspirés par un ventilateur électrique 16 (figure 1). Le parcours labyrinthique précité est réalisé à l'aide de séparateurs en forme de couronnes circulaires à bords opposés relevés, de manière à réaliser des cuvettes 17 destinées à contenir de l'huile, dans laquelle sont immergés partiellement des rouleaux fous 18 disposés radialement et tourillonés sur les bords relevés des cuvettes.

Ces séparateurs ou cuvettes 17 sont à joint étanche alternativement sur la paroi intérieure du récipient et au centre, sur l'arbre tournant 19. Dans sa rotation lente qui lui est impartie par un moto-réducteur 20, cet arbre 19 entraîne des éléments filtrants circulaires 21 qui s'appuient sur les rouleaux mouilleurs 18, lesquels tournent fous sur eux-mêmes, par adhérence, en puisant ainsi continuellement de l'huile contenue dans les cuvettes 17, afin de mouiller uniformément les filtres tournants 21.

De même que les filtres inférieurs 9, les filtres tournants 21 sont enfermés par deux minces tôles perforées qui présentent à leur périphérie une couronne pleine dans la région des rouleaux qui n'est pas mouillée, avec une garniture qui glisse à joint étanche conte la paroi intérieure du récipient 1. De cette façon, dans leur parcours labyrinthique à travers les filtres constamment mouillés d'huile, les gaz déposent leurs derniers résidus nocifs et parviennent à la partie supérieure du récipient, dans un tiroir 22 qui contient du charbon actif granulaire, pour être ensuite transférés, une fois parfaitement épurés, par le ventilateur électrique 16 jusqu'à une bouche de rejet 23 et de là, dans l'atmosphère environnante.

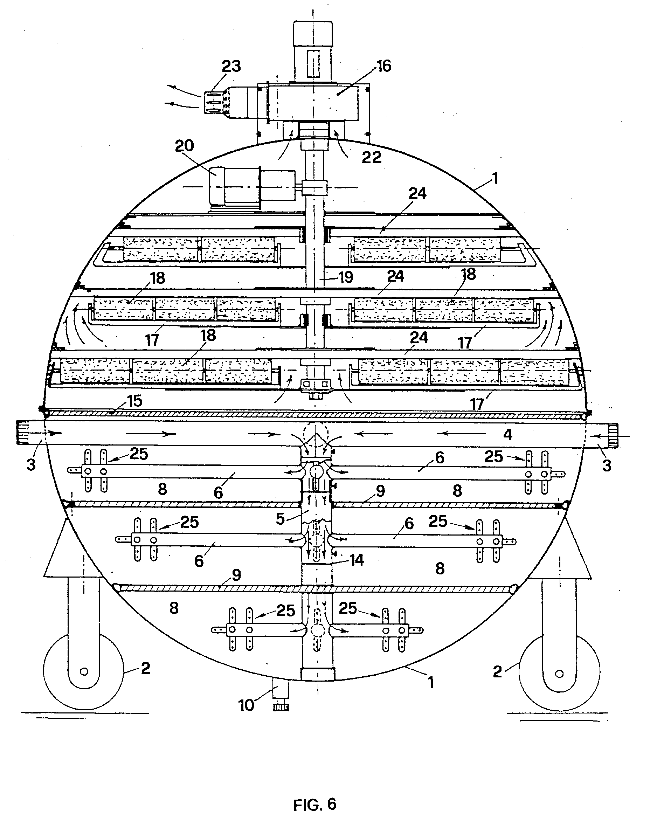

Sur les figures 6 à 10, on a montré une deuxième forme de réalisation de la machine où les disques porte-feutre 24 sont ancrés à la paroi intérieure de la partie supérieure du récipient sphérique 1, de manière à ne pas pouvoir tourner, et sont lubrifiés par une série de rouleaux 18, par exemple en caoutchouc, montés sur les cuvettes calées sur l'arbre 19 du moto-réducteur et mises en rotation par celui-ci.

De cette façon, on obtient une meilleure lubrification des filtres, un plus faible frottement des parties tournantes provoqué par les garnitures en caoutchouc qui glissent sur la surface de la sphère, et un meilleur rendement de la filtration des fumées du fait qu'il n'y a qu'une plus faible dispersion des fumées non encore traitées.

Dans la partie inférieure de la sphère 1, on prévoit de remplacer les éléments brise-fumée poreux 7 par des buses perforées 25 qui assurent la diffusion fragmentée du gaz dans la solution aqueuse 8.

Les agencements ci-dessus décrits réalisent une plus fine fragmentation des bulles de gaz et un refroidissement plus prononcé de ces bulles, en rendant la machine selon la présente invention, non seulement nouvelle et originale, aux normes européennes correspondantes.

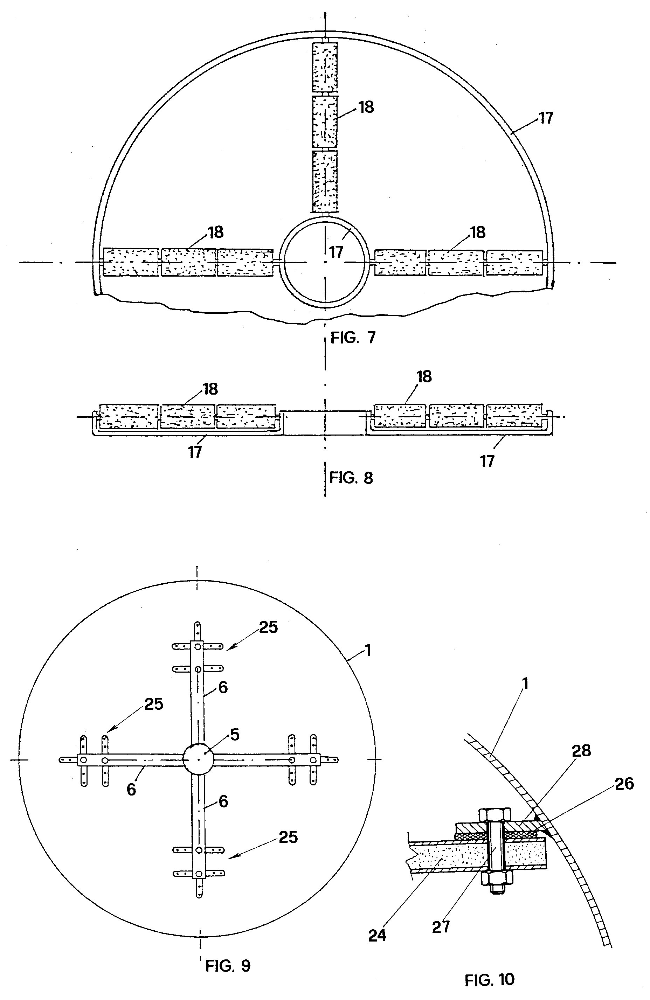

Dans le détail représenté sur la figure 10, qui est relatif à la demi-sphère supérieure, on voit que le filtre 24 est fixé solidement au récipient 1 par un anneau 28 avec interposition d'une garniture 26, le tout étant fixé solidement au moyen d'une série de vis 27.

## Revendications

1. Machine pour l'épuration de fumées industrielles, notamment des gaz d'échappement de véhicules automobiles de grosse cylindrée fonctionnant dans des locaux fermés, caractérisée en ce qu'elle comprend un récipient (1), par exemple sphérique, divisé en deux moitiés dont la première, tournée vers le bas, assure une première épuration par diffusion fine des gaz dans une solution aqueuse appropriée, tandis que la seconde, disposée au dessus, opère l'épuration complète desdits gaz en les faisant traverser des filtres (21) appropriés, inhibés d'huile, le long d'un parcours labyrinthique.

2. Machine selon la revendication 1, caractérisée en ce que dans la moitié inférieure la diffusion fine des gaz s'effectue par introduction de ces derniers à travers des croisillons tubulaires (6) séparés par des filtres appropriés (9), qui convergent en différents plans vers un conduit vertical (5) et qui portent à l'extrémité de chaque croisillon un élément poreux (7) à profil sphérique, le tout étant immergé dans une solution aqueuse.

3. Machine selon les revendications 1 et 2, caractérisée en ce que la moitié supérieure du récipient (1) comporte plusieurs filtres (21), eux aussi disposés suivant des plans espacés parallèles et convenablement imbibés d'huile en continu, par l'effet de leur contact avec des rouleaux mouilleurs (18) à axe radial, qui puisent l'huile dans des cuvettes appropriées (17) et qui sont maintenus en rotation lente à l'intérieur de ces cuvettes par le contact avec les filtres tournants (21) entraînés par un moto-réducteur (20) par l'intermédiaire d'un arbre (19) à axe vertical.

4. Machine selon la revendication 3, caractérisée en ce que les gaz partiellement épurés qui proviennent de la moitié inférieure de la machine et qui sont aspirés vers le haut par un ventilateur électrique (16), suivant un parcours labyrinthique réalisé par les cuvettes annulaires (17) qui sont montées à joint étanche alternativement sur la paroi inférieure du récipient et au centre, sur l'arbre (19) qui maintient les filtres (19) en rotation.

5. Machine selon les revendications précédentes, caractérisée en ce que l'étanchéité périphérique des filtres inférieurs (9) en contact avec la paroi intérieure du récipient (1) est réalisée au moyen de garnitures tubulaires (12) insérées et ancrées au bord des filtres, et convenablement pressées contre la paroi tubulaire de la moitié inférieure du récipient (1).

6. Machine selon la revendication 1, caractérisée en ce que des disques porte-feutre (24) sont ancrés à la paroi intérieure de la partie supérieure du récipient (1) et sont huilés par une série de rouleaux (18) en caoutchouc montés sur un croisillon monté en porte-à-faux et calé sur l'arbre (19) d'un moto-réducteur pour sa mise en rotation.

7. Perfectionnements aux machines épuratrices selon la revendication 2, caractérisés en ce que les éléments poreux (7) sont remplacés par des buses perforées (25) pour assurer la diffusion fragmentée du gaz dans la solution aqueuse (8).
